(19) Europäisches Patentamt
European Patent Office
Office européen des brevets

(11) **EP 2 524 446 B1**

(12) **FASCICULE DE BREVET EUROPEEN**

(45) Date de publication et mention
de la délivrance du brevet:
**04.05.2016 Bulletin 2016/18**

(21) Numéro de dépôt: **11705017.9**

(22) Date de dépôt: **13.01.2011**

(51) Int Cl.:
*H04B 7/02* (2006.01)   *H04L 1/06* (2006.01)

(86) Numéro de dépôt international:
**PCT/FR2011/050065**

(87) Numéro de publication internationale:
**WO 2011/086332 (21.07.2011 Gazette 2011/29)**

(54) **PROCEDE DE TRANSMISSION D'UN SIGNAL NUMERIQUE POUR UN SYSTEME DISTRIBUE, PRODUIT PROGRAMME ET DISPOSITIF RELAIS CORRESPONDANTS**

VERFAHREN ZUR DIGITALSIGNALÜBERTRAGUNG FÜR EIN VERTEILTES SYSTEM, SOWIE ENTSPRECHENDE PROGRAMMIERBARE ANORDNUNG UND RELAY.

METHOD FOR TRANSMITTING A DIGITAL SIGNAL FOR A DISTRIBUTED SYSTEM ANN CORRESPONDING PROGRAMMABLE PRODUCT AND RELAY APPARATUS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.01.2010 FR 1050200**

(43) Date de publication de la demande:
**21.11.2012 Bulletin 2012/47**

(73) Titulaire: **Orange**
**75015 Paris (FR)**

(72) Inventeurs:
• **SAADANI, Ahmed**
**F-92130 Issy Les Moulineaux (FR)**
• **NAHAS, Michel**
**F-75012 Paris (FR)**
• **REKAYA, Ghaya**
**F-92160 Antony (FR)**

(74) Mandataire: **Jeune, Pascale**
**Orange**
**FT/OLNC/OLPS/IPL/PAT**
**38-40, rue du Général Leclerc**
**92794 Issy-Les-Moulineaux Cedex 9 (FR)**

(56) Documents cités:
**WO-A1-2008/066888    WO-A2-2008/057594**
**US-A1- 2003 053 487    US-A1- 2006 120 477**

**Description**

**Domaine de l'invention**

Le domaine de l'invention est celui de la transmission de données codées dans un réseau de télécommunication de type sans fil ou mobile. Au sein de ce domaine, l'invention se rapporte plus particulièrement aux codes spatio-temporels, aux procédés et codeurs correspondants pour des communications coopératives asynchrones. De telles communications sont transmises par des relais d'un réseau cellulaire, par un réseau de capteurs, par un réseau ad hoc ou par différentes antennes d'un réseau distribué. Chaque noeud considéré du réseau comprend une seule antenne pour assurer l'émission et la réception. Le signal reçu par la destination est donc transmis par au moins deux noeuds du réseau qui transmettent ou relaient le signal d'une façon asynchrone, c'est-à-dire sans contrainte forte de synchronisation. La transmission met en oeuvre une technique de codage distribué en espace car reposant sur plusieurs noeuds et en temps car nécessitant plusieurs temps symboles.

**Art antérieur**

Dans les réseaux sans fils, le signal transmis peut subir une atténuation importante du fait du phénomène d'évanouissement (ou fading selon la terminologie anglo-saxonne).
Pour lutter contre ce phénomène, une technique connue consiste à transmettre plusieurs copies du même signal pour créer une diversité de transmission permettant de combattre efficacement les effets nuisibles du fading. La diversité peut être spatiale ; elle est obtenue en transmettant des signaux à partir de différents endroits. La destination reçoit alors des versions du signal qui ont subi des fadings indépendants.
Une des techniques de transmission permettant d'exploiter la diversité spatiale est le codage spatio-temporel. Dans un système de transmission comprenant plusieurs antennes en émission et/ou en réception, l'emploi d'un codage spatio-temporel (ou codage espace temps) permet de faire un multiplexage spatial (entre les antennes) et temporel des symboles d'information à transmettre afin d'exploiter au mieux les degrés de liberté du système. Ces codes espace-temps permettent d'exploiter les gains de multiplexage (augmentation du débit d'information donc du rendement du système) et de diversité des systèmes multi-antennes. A titre d'illustration, un système multi antennes comprend $N_t$ antennes d'émission et $N_r$ antennes de réception. Le rendement est défini par $r = n/T$ avec $n$ le nombre de symboles d'information envoyés pendant le temps $T$. Le rendement maximal d'un code espace-temps est égal à $r = \min(N_t, N_r)$. Soit $C$ la matrice suivante du code espace-temps, de dimension $N_t \times T$:

$$C = \begin{bmatrix} c_{11} & \cdots & c_{1T} \\ \vdots & \ddots & \vdots \\ c_{N_t1} & \cdots & c_{N_tT} \end{bmatrix}.$$

Chaque ligne $i$ de cette matrice alimente une antenne d'émission $i$. Chaque élément $c_{ij}$ de la ligne $i$ est une combinaison linéaire des symboles d'information et est émis à l'instant $jT$. La probabilité d'erreurs par paire $\Pr\{Z \rightarrow Z'\}$ est définie comme la probabilité que le récepteur décode le mot de code $Z' \neq Z$ alors que le mot de code $Z$ a été émis et que le mot de code $Z$ est un mot de code du code C. Cette probabilité dépend de deux critères relatifs à la structure de la matrice du code $C$. En effet, soit $B$ la matrice de différence entre $Z$ et $Z'$:

$$B = \begin{bmatrix} z_{11} - z'_{11} & \cdots & z_{1T} - z'_{1T} \\ \vdots & \ddots & \vdots \\ z_{N_t1} - z'_{N_t1} & \cdots & z_{N_tT} - z'_{N_tT} \end{bmatrix}.$$

Dans la référence [1], il est démontré que pour minimiser la probabilité d'erreur par paire, il faut que :

- le rang de la matrice $B.B^H$, pour l'ensemble de toutes les paires de matrices ZZ', soit maximal pour garantir une diversité maximale. Ceci définit ainsi le critère du rang du code.
- le déterminant de la matrice $B.B^H$, pour l'ensemble de toutes les paires de matrices ZZ', soit maximisé pour minimiser la probabilité d'erreur par paire. Ceci définit ainsi le critère du déterminant du code.

Un exemple d'un code spatio-temporel dans le cas $N_t$ = 2 et $N_r$ = 1 est celui d'Alamouti [2]. A l'instant un, les symboles $s_1$ et $s_2$ sont émis respectivement par les antennes d'émission $T_1$ et $T_2$ puis à l'instant deux, les symboles $- s_2^*$ et $s_1^*$ sont émis par les antennes d'émission $T_1$ et $T_2$. Sous forme matricielle, le code d'Alamouti est représenté sous la forme suivante :

$$C_{\text{Alamouti}} = \begin{bmatrix} s_1 & -s_2^* \\ s_2 & s_1^* \end{bmatrix}.$$

Le code d'Alamouti permet d'atteindre la diversité maximale égale à deux puisque chaque symbole est émis dans deux versions indépendantes (une par antenne). Cette constatation peut être facilement vérifiée en utilisant le critère du rang. En outre, ce code présente un rendement plein de un car il permet l'envoi de deux symboles ($n$ = 2) pendant deux temps symboles ($T$ = 2).

Les systèmes de transmission multi-antennes dits MIMO (abréviation des termes anglo-saxons Multiple Input Multiple Output) assurent une diversité spatiale mais les antennes doivent être localisées sur un même noeud du réseau. La colocalisation d'antennes d'émission et/ou de réception ne pose pas de difficulté dans le cas de stations de base. Mais lorsque les émetteurs sont des terminaux (mobiles dans un réseau cellulaire, capteurs dans un réseau de capteurs, ...), cette colocalisation pose des contraintes de taille, de coût ou de limitations de matériel.

Les communications dites coopératives permettent aux terminaux à une seule antenne de bénéficier de la diversité spatiale appelée dans ce cas diversité de coopération : les noeuds à une seule antenne d'un réseau multiutilisateurs partagent leurs antennes de façon à créer un système multi-antennes virtuel. Ainsi ce nouveau système MIMO virtuel peut exploiter les techniques connues pour l'amélioration de la qualité de transmission utilisées pour les systèmes MIMO. Dans les systèmes coopératifs avec une transmission distribuée (par exemple en utilisant des relais), les antennes distribuées peuvent être considérées comme des antennes multiples virtuelles qui vont transmettre vers la destination. Par conséquent, les codes spatio-temporels peuvent être utilisés d'une manière distribuée.

US 2006/120477A1 décrit un système pour une mise en oeuvre MIMO coopérative utilisant un codage spatio-temporel STBC (Space Time Block Code) ou STTC (Space Time Treillis Code).

Plusieurs travaux antérieurs se sont intéressés au codage spatio-temporel pour des systèmes distribués synchrones. Dans ce cas, les trames sont synchronisées au niveau des relais et de la destination. Toutefois, compte tenu des imperfections des méthodes de synchronisation, des retards dus aux sauts multiples (multi-hops), de la nature des relais, du coût et de la complexité de la synchronisation, la synchronisation n'est pas toujours effective dans le cas d'antennes distribuées sur différents noeuds du réseau. Une absence de synchronisation détruit les structures de codes synchrones et provoque la perte de leurs propriétés (par exemple le critère du rang). Citons pour exemple le code d'Alamouti. Si l'antenne $T_2$ a un retard d'un temps symbole par rapport à l'antenne $T_1$, la matrice du code perçue par le récepteur devient :

$$\begin{bmatrix} s_1 & -s_2^* & 0 \\ 0 & s_2 & s_1^* \end{bmatrix}$$

Dans ce cas, le déterminant est égale à : $|ds_1|^4 + 2|ds_1|^2|ds_2|^2$ qui s'annule si et seulement si le symbole $s_1$ est le même pour deux mots de codes différents, $ds_j$ étant la différence entre les symboles à la position $j$ pour deux mots de codes.

Pour garder les propriétés du rang (qui garantie le degré de diversité maximal) et du déterminant des codes spatio-temporels lorsque les signaux reçus au niveau des antennes sont asynchrones, deux principales solutions ont été proposées.

La première solution [3], décrit la conception de codes spatio-temporels asynchrones robustes à la perte de synchronisation et qui réduisent le coût de cette synchronisation.

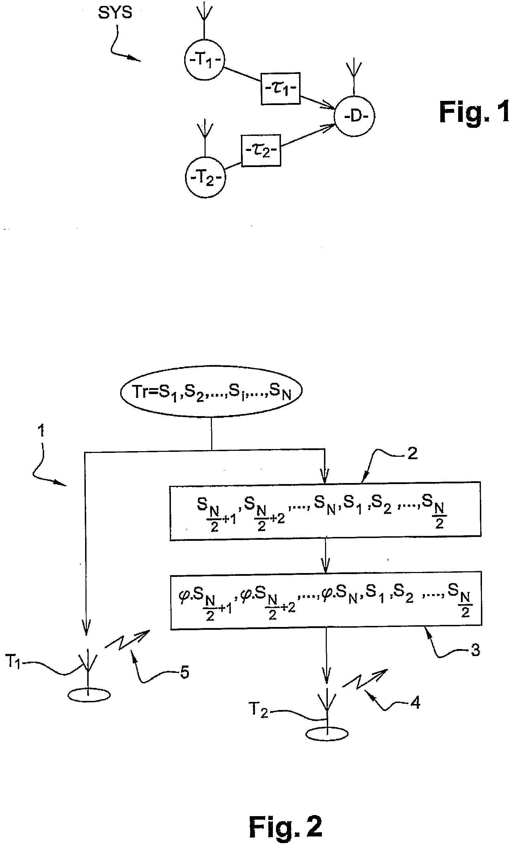

Soit deux noeuds $T_1$, $T_2$ ayant chacun seulement une antenne et qui transmettent vers une destination d'une manière asynchrone, figure 1. Du fait de la nature distribuée du réseau, un délai différent est introduit par les deux noeuds $T_1$ et $T_2$. On note $\tau_1$ et $\tau_2$ les délais respectifs à la destination D entre l'arrivée du signal provenant de $T_1$ et celui provenant de $T_2$. Le délai relatif entre les noeuds est noté $\Delta = \tau_2 - \tau_1$. En considérant, sans perte de généralisation que $\tau_2 \geq \tau_1$, on an $\Delta \geq 0$. Sans perte de généralisation, on considère que le délai relatif $\Delta$ est absorbé par l'effet multi-trajet et qu'il est un multiple entier d'un temps symbole. On suppose que les délais sont connus par la destination D mais pas forcément par les noeuds $T_1$, $T_2$.

Dans le cas correspondant à la figure 1, les auteurs de [3] ont proposé une version modifiée du code d'Alamouti pour combattre les effets de non synchronisation entre les deux noeuds $T_1$, $T_2$. La matrice du code proposé est :

$$C_{Alamouti}^{D} = \begin{bmatrix} s_1 & -s_2^* & -s_2^* \\ s_2 & s_1^* & s_1^* \end{bmatrix}.$$

Si un délai existe entre la réception des deux lignes à la destination D, le déterminant de la matrice du code ne s'annule que si les deux symboles $s_1$ et $s_2$ sont les mêmes pour les deux mots de code ; cette nouvelle forme du code d'Alamouti résiste au manque de synchronisation entre les deux noeuds émetteurs $T_1$, $T_2$. Toutefois, le fait de répéter les mêmes symboles deux fois augmente la taille du code et entraîne une baisse du rendement qui devient égal à $r = 2/3$.

La seconde solution [4], préconise l'utilisation de la technique OFDM (Orthogonal Frequency Division Multiplexing) pour éliminer l'effet de synchronisation temporelle grâce à l'utilisation d'un préfixe cyclique. Cette utilisation de la technique OFDM permet de combattre les effets de la désynchronisation dans un réseau de communication sans fil en considérant le retard comme celui d'un trajet multiple. Toutefois, bien que cette technique permette de synchroniser les trames de différentes antennes, elle présente les inconvénients suivants :

- à la sortie du récepteur OFDM, le signal transmis par les deux antennes a une diversité égale à un même s'il a emprunté deux trajets différents.

- pour éliminer l'interférence entre les blocs transmis, il faut utiliser un intervalle de garde ou un préfixe cyclique qui fait perdre en débit utile et donc en rendement. En outre, pour être sûr de pouvoir synchroniser les trames provenant des antennes du réseau, il faut que l'intervalle de garde ou le préfixe cyclique introduit soit de longueur supérieure aux délais entre ces antennes. A cette fin, il faut augmenter la taille de l'intervalle de garde ou du préfix cyclique pour qu'elle soit plus grande que le délai maximal pouvant être obtenu entre les antennes du réseau ; ceci réduit aussi le rendement.

- certains systèmes de communications sans fils n'utilisent pas l'OFDM, citons pour exemple les systèmes TDMA ou CDMA.

**Caractéristiques principales de l'invention**

L'invention propose une technique de transmission permettant d'améliorer le codage spatio-temporel pour des systèmes distribués qui ne sont pas forcément synchrones, ni toujours asynchrones.

L'invention a pour objet un procédé de transmission de trames de $N>2$ symboles $S_i$, destiné à un système distribué à au moins deux noeuds-émetteur, comprenant :

- une permutation circulaire d'une trame de N symboles $S_i$,
- une multiplication de m premiers symboles permutés par un coefficient de phase $\varphi \neq 1$, $0<m \leq [N/2]-1$,
- une émission par un des noeuds de la trame comprenant les symboles permutés multipliés et
- une émission par un autre des noeuds de la trame de N symboles $S_i$.

L'invention a en outre pour objet un système de transmission distribué à au moins trois noeuds dont deux noeuds-émetteur de trames de N symboles.

Ainsi, un système selon l'invention comprend :

- des moyens de permutation circulaire d'une trame de N symboles,
- des moyens de multiplication par un coefficient de phase $\varphi \neq 1$ de m premiers symboles permutés, $0<m \leq [N/2]+1$,

et est tel que :

- un des noeuds-émetteur comprend des moyens pour émettre la trame de symboles permutés multipliés,
- un autre noeud-émetteur comprend des moyens pour émettre la trame de N symboles.

Les deux noeuds-émetteurs émettent à destination d'un destinataire. Le destinataire reçoit donc la trame de symboles émise par le premier noeud (un des noeuds) et la trame de symboles permutés pondérés par $\varphi$ émise par le

deuxième noeud (l'autre noeud), ce qui détermine un nouveau code espace temps.

De préférence, la permutation circulaire décale les symboles de m rangs à droite, avec typiquement $m = [N/2]$ dans le cas où N est pair et avec typiquement $m = [N/2]$ ou $m = [N/2] +$ dans le cas où N est impair, [x] étant la partie entière de x. Ainsi, quels que soient les délais $\tau_1$, $\tau_2$ de transmission entre un noeud et le destinataire, le code espace temps distribué entre le premier et le deuxième noeuds donne une diversité pleine de deux sur l'intervalle de délai relatif $\Delta \in \{-\Delta_{max}, +\Delta_{max}\}$ pour N pair et sur l'intervalle de délai relatif $\Delta \in \{(-\Delta_{max} + 1), +\Delta_{max}\}$ ou $\Delta \in \{-\Delta_{max}, (+\Delta_{max} - 1)\}$ pour N

impair selon que $m=[N/2]$ ou $m=[N/2]+1$, avec $\Delta_{max} = \left[\dfrac{N+1}{2}\right] - 1$.

Le nouveau code permet d'assurer une nouvelle forme de diversité appelée diversité de coopération dans des réseaux sans fil dont les noeuds ne sont pas nécessairement synchronisés.

Selon un mode de réalisation particulier, un procédé de transmission comprend en outre une détermination d'une première et d'une deuxième nouvelles trames comprenant des symboles construits, respectivement $X_i$ et $X'_i$, par combinaison des symboles $S_i$, les symboles construits $X_i$ et $X'_i$ déterminant deux points différents d'une même constellation, la permutation circulaire et la multiplication étant appliquée sur la deuxième nouvelle trame de symboles $X'_i$ avant émission par un des noeuds des symboles permutés et multipliés et l'autre noeud émettant la première nouvelle trame.

Cette construction de nouveaux symboles $X_i$ et $X'_i$ permet d'obtenir une diversité de constellation car chaque émetteur émet une configuration des mêmes symboles correspondant à un point différent d'une constellation. La probabilité d'erreur par paire du code devient plus faible que dans le cas où le procédé, pour un même rendement, transmet les symboles $S_i$. En faisant porter la permutation circulaire et la pondération sur une combinaison des symboles $S_i$ et non plus directement sur les symboles $S_i$, ceci permet donc d'augmenter la robustesse du procédé de transmission.

Selon un mode de réalisation particulier, un procédé de transmission est tel que la première nouvelle trame comprend les symboles $X_i$ tels que $X_i = S_{2i-1} + \theta.S_{2i}$ et la deuxième nouvelle trame comprend les symboles $X'_i$ tels que

$X'_i = S_{2i-1} - \theta.S_{2i}$. $N' = \dfrac{N}{2}$ est la taille des nouvelles trames des symboles $X_i$ et $X'_i$ à émettre ; il s'agit de la longueur du nouveau code. Le nouveau code spatio-temporel permet donc de garantir une diversité pleine dans un réseau à deux émetteurs émettant vers une même destination pour un délai entre les deux émetteurs compris dans un intervalle $\Delta \in \{-\Delta_{max}, +\Delta_{max}\}$ qui varie en fonction de la taille du code $N'$. Pour une longueur paire du code, la valeur absolue du délai maximal que le code peut tolérer est : $\Delta_{max} = \dfrac{N'}{2} - 1$. Si N' est impair, le délai maximal tolérable par le code est la partie entière de la division de $N'$ par deux. Donc, pour augmenter l'intervalle de tolérance, il suffit d'augmenter la taille $N'$ du code.

Selon un mode de réalisation particulier, un procédé de transmission est tel que $\theta = \exp(j.\dfrac{\pi}{4})$.

Cette valeur d'angle de rotation minimise la probabilité d'erreur par paire pour une constellation des symboles $S_i$ de type 4QAM ou 16QAM.

Selon un mode de réalisation particulier, un procédé de transmission est de type OFDMA et est tel que la trame émise par un noeud est multiplexée sur une des sous porteuses.

Ce mode de réalisation est tout à fait adapté pour des systèmes coopératifs asynchrones de type OFDMA. Dans le cas de deux noeuds, ce mode correspond à un code espace temps

$$C^{CP} = \begin{bmatrix} X_1 & X_2 & X_3 & X_4 & X_5 & X_6 & X_7 & X_8 \\ \varphi X'_5 & \varphi X'_6 & \varphi X'_7 & \varphi X'_8 & X'_1 & X'_2 & X'_3 & X'_4 \end{bmatrix}$$ distribué entre les sous porteuses et les deux noeuds : chaque ligne du code est multiplexée sur une sous porteuse du multiplexeur OFDM d'un des noeuds.

Le code espace temps $C^{CP}$ a autant de lignes que de noeuds-émetteur. Il permet de manière extrêmement avantageuse de réduire les contraintes de synchronisation entre les noeuds puisqu'il suffit que le délai relatif $\Delta$ appartienne à un des intervalles $[k.T_{ofdm}; k.T_{ofdm} + T_{pc}]$ pour que le destinataire puisse décoder le code reçu, avec $T_{ofdm}$ la durée d'un symbole OFDM, k un entier et $T_{pc}$ la durée du préfixe cyclique. En outre, le code espace temps $C^{CP}$ permet une réduction de la durée du préfixe cyclique en permettant son adaptation au seul délai relatif $\Delta$ et non pas à la valeur maximale des délais entre un noeud et le destinataire. Avec cette seule contrainte sur le préfixe cyclique, le décodage du signal à la réception est toujours possible avec une diversité de deux.

Selon un mode de réalisation particulier, un système selon l'invention est tel que chacun des deux noeuds-émetteur comprend un multiplexeur OFDM avec plusieurs sous porteuses qui multiplexe une des trames sur une des sous porteuses.

L'invention a en outre pour objet un relais destiné à un système de transmission distribué de type OFDMA pour la mise en oeuvre d'un procédé de transmission selon l'invention, comprenant :

- un multiplexeur OFDM avec plusieurs sous porteuses pour multiplexer une trame de symboles sur une des sous porteuses du multiplexeur.

L'invention a en outre pour objet un procédé de réception de trames de N symboles, destiné à un système distribué à au moins trois noeuds dont deux noeuds-émetteur, comprenant :

- un décodage d'une trame reçue résultat de l'émission d'au moins une première trame émise par le premier noeud-émetteur et d'une deuxième trame émise par le deuxième noeud-émetteur en utilisant un code espace temps dont la matrice comprend autant de lignes que de noeuds-émetteur, la première ligne étant identique à la première trame émise par le premier noeud émetteur et la deuxième ligne étant construite à partir de la ligne précédente en appliquant une permutation circulaire aux symboles de la ligne zqaqaé précédente et une multiplication par un coefficient de phase $\varphi \neq 1$ sur m symboles permutés, $0 < m \leq [N/2]+1$.

L'invention a en outre pour objet un récepteur de trames de N symboles, destiné à un système distribué à au moins trois noeuds dont deux noeuds-émetteur et le récepteur, comprenant :

- un décodeur d'une trame reçue résultat de l'émission d'au moins une première trame émise par le premier noeud-émetteur et d'une deuxième trame émise par le deuxième noeud-émetteur, le décodeur ayant la fonction inverse d'un codeur utilisant un code espace temps dont la matrice comprend autant de lignes que de noeuds-émetteur, la première ligne étant identique à la première trame émise par le premier noeud émetteur et la deuxième ligne étant construite à partir de la ligne précédente en appliquant une permutation circulaire aux symboles de la ligne précédente et une multiplication par un coefficient de phase $\varphi \neq 1$ sur m symboles permutés, $0 < m \leq [N/2]+1$.

Ce procédé de réception et ce récepteur ont pour avantage d'être adaptés à un système mettant en oeuvre un procédé de transmission selon l'invention.

Les différents modes de réalisation précédents peuvent être combinés ou pas avec un ou plusieurs de ces modes pour définir un autre mode de réalisation.

Selon une implémentation préférée, les étapes du procédé de transmission, respectivement de réception, sont déterminées par les instructions d'un programme de transmission, respectivement de réception, incorporé dans un ou plusieurs circuits électronique telle des puces elle-même pouvant être disposées dans des dispositifs électroniques du système. Le procédé de transmission, respectivement de réception, selon l'invention peut tout aussi bien être mis en oeuvre lorsque ce programme est chargé dans un organe de calcul tel un processeur ou équivalent dont le fonctionnement est alors commandé par l'exécution du programme.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

**Liste des figures**

D'autres caractéristiques et avantages de l'invention apparaîtront plus clairement à la lecture de la description suivante de modes de réalisation particuliers, donnés à titre de simple exemple illustratif et non limitatif, illustrés par les dessins annexés, parmi lesquels :

- la figure 1 est un schéma illustrant la topologie de base des systèmes distribués asynchrones.
- la figure 2 est un organigramme simplifié d'un procédé de transmission selon l'invention mis en oeuvre par un système illustré par la figure 1.
- la figure 3 est un organigramme simplifié d'un mode de réalisation particulier d'un procédé de transmission selon l'invention mis en oeuvre par un système illustré par la figure 1.
- la figure 4 est un schéma illustrant la topologie de base des systèmes distribués asynchrones avec relais.

## Description de modes de réalisation particuliers

En référence à la figure 1, qui est un schéma illustrant la topologie de base des systèmes SYS distribués asynchrones, on considère deux noeuds $T_1$ et $T_2$ non synchronisés entre eux qui envoient le même signal à un troisième noeud D avec un délai respectif de $\tau_1$ et $\tau_2$ (avec $\Delta = \tau_2 - \tau_1$). Ainsi les symboles $S_i$ émis par les noeuds $T_1$ et $T_2$ sont reçus par le noeud D (destinataire) de la manière suivante :

en provenance de $T_1$: $0^{\tau_1}$ $S_1$ $S_2$ ... $S_i$ ... $S_N$
en provenance de $T_2$ : $0^{\tau_2}$ $S_1$ $S_2$ ... $S_i$ ... $S_N$

$0^{\tau_i}$ représente un vecteur de zéros de longueur $\tau_i$ (supposé être multiple d'un temps symbole). $N$ est la taille de la trame d'information à envoyer.

Ce schéma de transmission assure une diversité de deux si les délais $\tau_1$ et $\tau_2$ sont différents. Si les délais sont égaux, le récepteur D ne peut pas distinguer un symbole en provenance d'un noeud $T_1$ d'un autre symbole provenant de l'autre noeud $T_2$. Le récepteur D voit un symbole subissant une atténuation globale d'un seul trajet qui est la superposition de celui des deux chemins empruntés. Donc si les noeuds $T_1$ et $T_2$ deviennent synchrones $\tau_1 = \tau_2$ ($\Delta = 0$), la diversité du système devient égale à un.

Ainsi, ce schéma de transmission a une diversité égale à deux uniquement si $\tau_1 \neq \tau_2$ ($\Delta \neq 0$).

$N + \tau_{max}$ temps symboles sont nécessaires pour recevoir à la destination D les $N$ symboles émis par les noeuds $T_1$ et $T_2$, $\tau_{max}$ étant le délai maximal entre $\tau_1$ et $\tau_2$. Pour des trames longues ($N$ grand) et en supposant que le délai maximal $\tau_{max}$ est limité à quelques temps symboles, $\tau_{max}$ peut être négligé devant $N$. Dans ce cas le rendement est le suivant:

$$r_1 = \frac{N}{N + \tau_{max}} \underset{N \to \infty}{=} \frac{N}{N} = 1.$$

Un procédé selon l'invention permet d'obtenir une diversité de deux que les deux noeuds soient ou pas synchrones. A cette fin, l'invention repose sur un nouveau schéma de transmission basé sur la permutation de symboles. Ce schéma permet de garantir une diversité maximale pour un intervalle donné de délais $\Delta = \tau_2 - \tau_1$ incluant le cas synchrone ($\Delta = 0$). Cette permutation permet de garantir que les symboles émis par les noeuds $T_1$ et $T_2$, correspondant à un même symbole $S_i$, n'arrivent pas en même temps au destinataire tant que le délai $\Delta$ est dans un intervalle fixé.

Pour faciliter l'explication et sans perte de généralisation, la destination est considérée synchrone avec le noeud $T_1$, c'est-à-dire $\tau_1 = 0$, et le nombre total de symboles envoyés $N$ est supposé pair. La matrice des mots de code reçus par le destinataire D prend alors la forme suivante :

$$C = \begin{bmatrix} S_1 & S_2 & \dots & S_{i-1} & S_i & S_{i+1} & \dots & S_N & 0^\Delta \\ 0^\Delta & S_1 & S_2 & \dots & S_{i-1} & S_i & S_{i+1} & \dots & S_N \end{bmatrix}.$$

Ce code C donne une diversité pleine (de deux) pour tous les délais relatifs non nuls ($\Delta = \tau_2 - \tau_1 \neq 0$). Cependant pour $\Delta = 0$, ce code perd la diversité qui devient dans ce cas égale à un.

Pour résoudre ce problème, un procédé 1 selon l'invention illustré par la figure 2, effectue une permutation 2 circulaire qui revient à un décalage de m des symboles, typiquement vers la droite de m=N/2 :

$$S_{\frac{N}{2}+1}, \quad S_{\frac{N}{2}+2}, \quad \dots, \quad S_N, \quad S_1, \quad S_2, \quad \dots, \quad S_{\frac{N}{2}},$$

suivie d'une multiplication 3 des N/2 premiers symboles par un coefficient de phase $\varphi$ sur les mots de code à émettre 4 par le noeud $T_2$ de la façon suivante :

$$\varphi.S_{\frac{N}{2}+1}, \quad \varphi.S_{\frac{N}{2}+2}, \quad ..., \quad \varphi.S_N, \quad S_1, \quad S_2, \quad ..., \quad S_{\frac{N}{2}}$$

Ceci définit un nouveau code espace temps $C^P$ dont la matrice est la suivante :

$$C^P = \begin{bmatrix} S_1 & S_2 & ... & S_{i-1} & S_i & S_{i+1} & ... & S_N \\ \varphi.S_{\frac{N}{2}+1} & \varphi.S_{\frac{N}{2}+2} & ... & \varphi.S_N & S_1 & S_2 & ... & S_{\frac{N}{2}} \end{bmatrix}.$$

L'autre noeud $T_1$ émet 5 les symboles correspondant à la première ligne de la matrice.

L'utilisation du coefficient de phase $\varphi$ permet de respecter le critère du rang et donc de garantir une diversité égale à deux pour $\Delta$=0. En effet, le déterminant de la matrice $(Z^P\text{-}Z'^P).(Z^P\text{-}Z'^P)^H$ ne s'annule jamais si le mode de code $z^P$ du code $C^P$ est différent du mode de code $Z'^P$ du code $C^P$. Le bon choix du coefficient de phase $\varphi$ permet de maximiser le déterminant minimal pour l'ensemble de toutes les paires de matrices de mots de code.

Un exemple de valeur de $\varphi$ est $\varphi = \exp(j.\dfrac{\pi}{3})$.

Ce nouveau code espace temps $C^P$ permet de garantir une diversité de deux sur l'intervalle de délai relatif $\Delta \in \{-\Delta_{max}, +\Delta_{max}\}$ avec $\Delta_{max} = \dfrac{N}{2} - 1$ pour N pair. Le rendement de ce code est égal à :

$$r = \frac{N}{N + \tau_{max}} \underset{N \to \infty}{=} \frac{N}{N} = 1.$$

La matrice des mots de code reçus par le destinataire s'écrit sous la forme :

$$C_{0^\Delta}^R = \begin{bmatrix} S_1 & S_2 & ... & S_{i-1} & S_i & S_{i+1} & ... & S_N & 0^\Delta \\ 0^\Delta & \varphi.S_{\frac{N}{2}+1} & \varphi.S_{\frac{N}{2}+2} & ... & \varphi.S_N & S_1 & S_2 & ... & S_{\frac{N}{2}} \end{bmatrix}$$

Dans le cas où N est impair, le décalage est effectué sur m=[N/2] ou sur m=[N/2]+1 et le nouveau code espace temps $C^P$ permet de garantir une diversité de deux sur l'intervalle de délai relatif respectivement $\Delta \in \{-\Delta_{max} + 1, +\Delta_{max}\}$ où $\Delta \in \{-\Delta_{max}, +\Delta_{max}-1\}$ avec $\Delta_{max} = [N/2]$.

Par exemple, pour $N = 4$, la matrice des mots de code à émettre par les deux noeuds s'écrit sous la forme :

$$C = \begin{bmatrix} S_1 & S_2 & S_3 & S_4 \\ \varphi S_3 & \varphi S_4 & S_1 & S_2 \end{bmatrix}.$$

Si $\Delta$=0, le destinataire reçoit simultanément ces mots de code, la matrice des mots de code reçus est identique à celle des mots de code émis.

Si $\Delta$=1, le destinataire reçoit ces mots de code avec un décalage d'un temps symbole, la matrice des mots de code reçus est la suivante :

$$C = \begin{bmatrix} S_1 & S_2 & S_3 & S_4 & 0 \\ 0 & \varphi S_3 & \varphi S_4 & S_1 & S_2 \end{bmatrix}$$

La diversité est égale à deux que $\Delta = 0$ ou que $\Delta = 1$ car le déterminant ne s'annule jamais pour deux mots de code Z et Z' différents.

Le destinataire décode le signal reçu en tenant compte de cette nouvelle structure de code espace temps.

L'invention a été décrite pour deux noeuds émetteur $T_1$ et $T_2$. Elle peut être généralisée à un nombre $n_T$ de noeuds-émetteur supérieur. Le code espace temps correspondant a une matrice qui comprend autant de lignes que de noeuds-émetteur. La matrice pour $n_T$ noeuds-émetteur est identique à la matrice pour $n_T-1$ noeuds-émetteur sauf à l'ajout d'une ligne supplémentaire. La première ligne est identique à la trame émise par le 1er noeud émetteur. La deuxième ligne déjà décrite dans le cas de deux noeuds se compose d'une première série de symboles $\varphi.S_{\frac{N}{2}+1}$, $\varphi.S_{\frac{N}{2}+2}$, ..., $\varphi.S_N$ et d'une deuxième série de symboles $S_1$, $S_2$, ..., $S_{\frac{N}{2}}$. La troisième ligne est construite en fonction de cette deuxième ligne, elle comporte quatre séries de symboles, c'est-à-dire le nombre de séries de la ligne précédente multiplié par deux. La 1ère et la 2e séries sont construites à partir de la 1ère série de la ligne précédente. La 3e et la 4e séries sont construites à partir de la 2e série de la ligne précédente. La 1ère série est le résultat de la permutation 2 et de la multiplication 3 appliquée sur la 1ère série de la ligne précédente, ce qui donne $\varphi_1 S_{\frac{3N}{4}+1}$, $\varphi_1 S_{\frac{3N}{4}+2}$, ..., $\varphi_1 S_N$. La 2e série est la recopie de la 1ère moitié de la 1ère série de la ligne précédente, ce qui donne $\varphi.S_{\frac{N}{2}+1}$, $\varphi.S_{\frac{N}{2}+2}$, ..., $\varphi.S_{\frac{3N}{4}}$. La 3e série est le résultat de la permutation 2 et de la multiplication 3 appliquée sur la 2e série de la ligne précédente, ce qui donne $\varphi_2.S_{\frac{N}{4}+1}$, $\varphi_2.S_{\frac{N}{4}+2}$, ..., $\varphi_2.S_{\frac{N}{2}}$. série est la recopie de la 1ère moitié de la 2e série de la ligne précédente, ce qui donne $S_1$, $S_2$, ..., $S_{\frac{N}{4}}$. Les lignes suivantes sont construites selon le même principe que la troisième ligne. Il y a alors une relation entre la taille N de la trame, le nombre $n_T$ de noeuds-émetteur et l'intervalle de délai relatif $\Delta \in \{-\Delta_{max}, +\Delta_{max}\}$ pour $N$ pair pour lequel la diversité de deux est garantie : $\Delta_{max} = (N2^{(n_T-1)})-1$.

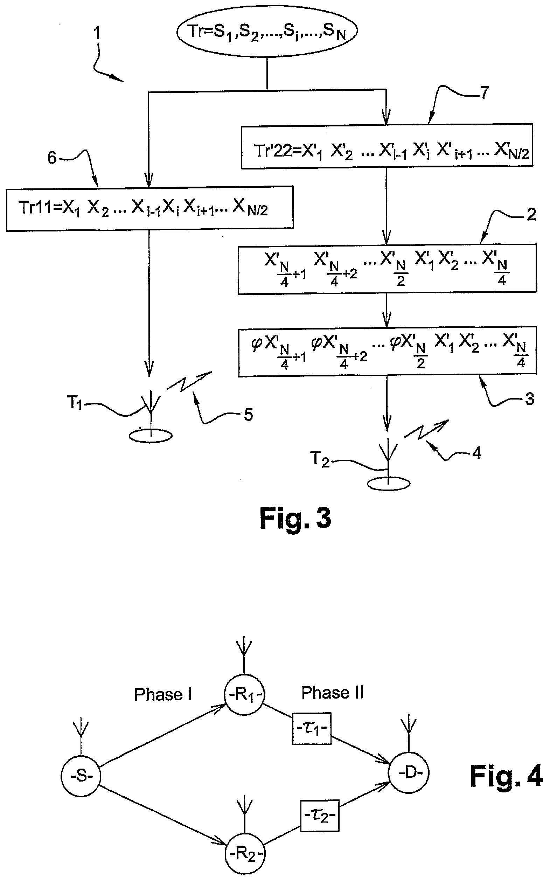

Selon un mode de réalisation particulier illustré par la figure 3, le procédé détermine 6, 7 une première Tr11 et une deuxième Tr'22 nouvelles trames comprenant des symboles construits, respectivement $X_i$ et $X'_i$, par combinaison des symboles $S_i$ :

$$Tr11 = X_1 \quad X_2 \quad ... \quad X_{i-1} \quad X_i \quad X_{i+1} \quad ... \quad X_{N'} \text{ et}$$

$$Tr'22 = X'_1 \quad X'_2 \quad ... \quad X'_{i-1} \quad X'_i \quad X'_{i+1} \quad ... \quad X'_{N'}.$$

La combinaison est telle que les symboles construits $X_i$ et $X'_i$ à partir des mêmes symboles $S_i$ sont deux points différents d'une même constellation. La combinaison est telle que : $X_i = aS_{2i-1} + b.S_{2i}$ et $X'_i = cS_{2i-1} + d.S_{2i}$ ($i = 1, ..., N' = N / 2$) où $a$, $b$, $c$ et $d$ sont des paramètres complexes qui permettent de faire la rotation des constellations d'origines des symboles $S_i$. En utilisant cette combinaison, le procédé permet donc d'obtenir en outre une diversité de constellation car chaque antenne émet une configuration des mêmes symboles $S_i$ correspondant à un point différent d'une même constellation. La combinaison est par exemple une sommation pour la 1ère trame et une soustraction pour la 2e trame d'un couple de symboles successifs ($S_i$, $S_{i+1}$): a=b=c=-d=1.

La permutation 2 circulaire est appliquée sur la deuxième nouvelle trame Tr'22 de symboles $X'_i$, ce qui donne :

$$X'_{\frac{N}{4}+1} \quad X'_{\frac{N}{4}+2} \quad ... \quad X'_{\frac{N}{2}} \quad X'_1 \quad X'_2 \quad ... \quad X'_{\frac{N}{4}}$$

La multiplication 3 par un coefficient de phase $\varphi$ est appliquée sur les N/4 premiers symboles permutés de la deuxième nouvelle trame Tr'22 de symboles $X'_i$, ce qui donne :

$$\varphi X'_{\frac{N}{4}+1} \quad \varphi X'_{\frac{N}{4}+2} \quad ... \quad \varphi X'_{\frac{N}{2}} \quad X'_1 \quad X'_2 \quad ... \quad X'_{\frac{N}{4}}.$$

L'émetteur $T_2$ émet 4 la deuxième nouvelle trame Tr'22 de symboles $X'_i$ permutés et multipliés par le coefficient de phase.

L'autre émetteur $T_1$ émet 5 la première nouvelle trame Tr11 de symboles $X_i$. La matrice du nouveau code espace temps $C^{CP}$ correspondant est la suivante :

$$C^{CP} = \begin{bmatrix} X_1 & X_2 & \cdots & X_{i-1} & X_i & X_{i+1} & \cdots & X_{N/2} \\ \varphi X'_{\frac{N}{4}+1} & \varphi X'_{\frac{N}{4}+2} & \cdots & \varphi X'_{\frac{N}{2}} & X'_1 & X'_2 & \cdots & X'_{\frac{N}{4}} \end{bmatrix}.$$

La matrice $C_{0^\Delta}^{CR}$ des mots de codes reçus par le destinataire D s'écrit sous la forme :

$$C_{0^\Delta}^{CR} = \begin{bmatrix} X_1 & X_2 & \cdots & X_{i-1} & X_i & X_{i+1} & \cdots & X_{\frac{N}{2}} & 0^\Delta \\ 0^\Delta & \varphi X'_{\frac{N}{4}+1} & \varphi X'_{\frac{N}{4}+2} & \cdots & \varphi X'_{\frac{N}{2}} & X'_1 & X'_2 & \cdots & X'_{\frac{N}{4}} \end{bmatrix}$$

avec la 1$^{ère}$ ligne qui correspond aux symboles émis par le 1$^{er}$ noeud $T_1$ et la 2$^e$ ligne qui correspond aux symboles émis par le deuxième noeud $T_2$ et retardés de $\Delta$ temps symbole du fait de l'absence de synchronisation.

Le destinataire décode le signal reçu en tenant compte du code espace temps $C^{CP}$ et du délai relatif $\Delta$.

Selon un mode de réalisation particulier, a=1, b=$\theta$, c=1 et d=-$\theta$. La combinaison des symboles $S_i$ est la suivante :

$$X_i = S_{2i-1} + \theta.S_{2i} \quad \text{et} \quad X'_i = S_{2i-1} - \theta.S_{2i} \ (i = 1, \ldots, \frac{N}{2}) \ ; \ \theta = \exp(j.\phi) = e^{j.\phi}.$$

$\theta = \exp(j.\phi) = e^{j.\phi}$.

Selon ce mode, les nouveaux symboles $X_i = S_{2i-1} + \theta.S_{2i}$ et $X'_i = S_{2i-1} - \theta.S_{2i}$ qui sont bien deux points différents d'une même constellation, sont émis respectivement par les deux noeuds $T_1$ et $T_2$. La taille des trames à émettre est donc $N' = N / 2$. C'est aussi la longueur du code espace temps $C^{CP}$. Ce dernier permet de garantir une diversité pleine dans un réseau à deux antennes transmettant vers une même antenne destination, pour un délai entre les deux antennes émettrices compris dans un intervalle $\Delta \in \{-\Delta_{max}, +\Delta_{max}\}$ qui varie en fonction de la taille N' du code.

Pour un N' pair, la valeur absolue du délai maximal que le code peut tolérer est : $\Delta_{max} = (N'/2)-1$. Si N' est impair, le délai maximal tolérable par le code est: $\Delta_{max} = [N'/2]$, avec [$x$] la partie entière de x. Donc pour augmenter l'intervalle de tolérance, il suffit d'augmenter la taille N' du code.

L'exemple suivant pour $N = 8$ et $\Delta = 0$ permet d'illustrer ce dernier mode de réalisation. Les symboles à transmettre sont : $S_1, S_2, S_3, S_4, S_5, S_6, S_7, S_8$ et la matrice du code espace temps (avec $N'=N/2=4$) est :

$$C^{CP} = \begin{bmatrix} X_1 & X_2 & X_3 & X_4 \\ \varphi X'_3 & \varphi X'_4 & X'_1 & X'_2 \end{bmatrix}.$$

avec:

$$X_1 = S_1 + \theta.S_2$$
$$X_2 = S_3 + \theta.S_4$$
$$X_3 = S_5 + \theta.S_6$$
$$X_4 = S_7 + \theta.S_8$$

et

$$X'_1 = S_1 - \theta . S_2$$
$$X'_2 = S_3 - \theta . S_4$$
$$X'_3 = S_5 - \theta . S_6$$
$$X'_4 = S_7 - \theta . S_8$$

La rotation choisie correspond à un angle de 45 degrés. Ceci donne donc : $\theta = \exp(j.\frac{\pi}{4}) = \exp(j.45°)$. Cette valeur d'angle de rotation minimise la probabilité d'erreur par paire pour une constellation des $S_i$ de type 4QAM et 16QAM. Le coefficient de phase $\varphi$ est choisi égal à $\varphi = \exp(j.\frac{\pi}{6})$.

Le   choix   des   paramètres   $a = \frac{1}{\sqrt{5}}(1 + j - j\theta)$,      $b = \frac{1}{\sqrt{5}}(1 + j - j\theta).\theta$, $c = \frac{1}{\sqrt{5}}(1 + j\theta)$, $d = \frac{1}{\sqrt{5}}(1 + j\theta)(1 - \theta)$ avec $\theta = \frac{1 + \sqrt{5}}{2}$ et $\varphi = j$ qui correspondent à ceux du Golden Code [5] est particulièrement adapté pour des systèmes synchrones tout en garantissant une diversité de deux pour des systèmes asynchrones.

L'exemple qui suit permet d'illustrer une mise en oeuvre d'un procédé selon l'invention par un système TDMA (Time Division Multiple Access), c'est-à-dire qui utilise un mode d'accès par répartition du temps. Les symboles d'information sont concaténés dans des trames et transmis en série. En prenant par exemple une longueur de code égale à $N' = N/2 = 8$, les $N$ symboles suivants sont à transmettre : $S_1$, $S_2$, ..., $S_{16}$. Les symboles $S_i$ ($i = 1, ..., N$) sont supposés appartenir à la modulation QPSK. En utilisant le nouveau code spatio-temporel $C^{CP}$ (rotation de 45 degrés $\theta = \exp(j.\frac{\pi}{4}) = \exp(j.45°)$ ), les matrices des mots de codes reçus par le destinataire pour les différents délais entre les deux antennes $T_1$ et $T_2$, le destinataire connaissant a priori le délai relatif $\Delta$, sont les suivantes :

$$\Delta = 0 :$$

$$C_0^{RC} = C^{CP} = \begin{bmatrix} X_1 & X_2 & X_3 & X_4 & X_5 & X_6 & X_7 & X_8 \\ \varphi X'_5 & \varphi X'_6 & \varphi X'_7 & \varphi X'_8 & X'_1 & X'_2 & X'_3 & X'_4 \end{bmatrix}.$$

-   Délai d'un temps symbole ($\Delta = 1$):

$$C_1^{RC} = \begin{bmatrix} X_1 & X_2 & X_3 & X_4 & X_5 & X_6 & X_7 & X_8 & 0 \\ 0 & \varphi X'_5 & \varphi X'_6 & \varphi X'_7 & \varphi X'_8 & X'_1 & X'_2 & X'_3 & X'_4 \end{bmatrix}.$$

-   Délai de deux temps symbole ($\Delta = 2$):

$$C_2^{RC} = \begin{bmatrix} X_1 & X_2 & X_3 & X_4 & X_5 & X_6 & X_7 & X_8 & 0 & 0 \\ 0 & 0 & \varphi X'_5 & \varphi X'_6 & \varphi X'_7 & \varphi X'_8 & X'_1 & X'_2 & X'_3 & X'_4 \end{bmatrix}.$$

-   Délai de trois temps symbole ($\Delta = 3$):

$$C_3^{RC} = \begin{bmatrix} X_1 & X_2 & X_3 & X_4 & X_5 & X_6 & X_7 & X_8 & 0 & 0 & 0 \\ 0 & 0 & 0 & \varphi X'_5 & \varphi X'_6 & \varphi X'_7 & \varphi X'_8 & X'_1 & X'_2 & X'_3 & X'_4 \end{bmatrix}$$

Où

$$X_i = S_{2i-1} + \theta.S_{2i} \text{ et } X'_i = S_{2i-1} - \theta.S_{2i}.$$

L'utilisation du code $C^{CP}$ par les émetteurs (chaque émetteur envoie une ligne) permet de garantir une diversité pleine (de deux) pour un délai maximal égal à $\Delta_{max} = \dfrac{N'}{2} - 1 = 3$. Le procédé permet donc de garantir une diversité égale à deux pour une plage de délais $\Delta$ = -3, -2, -1, 0, 1, 2, 3. Pour augmenter l'intervalle des délais pour lesquels la diversité est égale à deux, il faut augmenter la taille $N'$ du code.

Le destinataire décode le signal reçu en tenant compte du code espace temps $C^{CP}$ et du délai relatif $\Delta$, donc en utilisant une des matrices suivantes : $C_0^{RC}$, $C_1^{RC}$, $C_2^{RC}$ ou $C_3^{RC}$

L'exemple suivant permet d'illustrer la mise en oeuvre d'un procédé selon l'invention par un système coopératif asynchrone à relais illustré par la figure 4. Le système SYS comprend une source S, deux relais $R_1$ et $R_2$ et une destination D. Les noeuds/relais ont une seule antenne pour la transmission des données ce qui ne leur permet pas d'envoyer et de recevoir en même temps. Le lien direct entre la source S et la destination D n'existe pas, par exemple du fait d'une distance les séparant trop importante. Les relais utilisent le protocole Décoder-et-Transférer (DT) (Decode-and-Forward selon la terminologie anglosaxonne) pour relayer le signal reçu.

La période de transmission est divisée en deux phases t1, t2. Durant la première phase t1, la source S émet son message vers les relais $R_1$, $R_2$ et n'émet pas durant la deuxième phase t2. Les relais $R_1$, $R_2$, qui réussissent à décoder le signal de la source S sans erreurs, émettent le signal vers la destination D au cours de la deuxième phase t2. Du fait de la nature distribuée du réseau, des délais différents sont introduits par les relais $R_1$ et $R_2$, notés respectivement $\tau_1$ et $\tau_2$. Le délai relatif entre les deux relais est donc : $\Delta = \tau_2 - \tau_1$. La mise en oeuvre d'un procédé selon l'invention revient à considérer les relais $R_1$ et $R_2$ comme les noeuds du système représenté à la figure 1 : les schémas de transmission et de réception décrits en regard des figures 2 et 3 sont les mêmes.

L'exemple suivant permet d'illustrer la mise en oeuvre d'un procédé selon l'invention par un système coopératif asynchrone de type OFDMA (Orthogonal Frequency Division Multiple Access). Un système de type OFDMA est tel que les symboles d'information à transmettre sont transmis sur des fréquences orthogonales en utilisant à l'émission un multiplexeur OFDM basé sur une transformée de fourrier inverse. Le résultat de cette modulation est appelé "symbole OFDM", sa durée est notée $T_{ofdm}$. Avant d'émettre ce symbole OFDM, un préfixe cyclique est ajouté pour absorber les retards dus au canal et pour permettre de séparer à la réception le trajet le plus court des autres trajets à l'issue de la démodulation par une FFT. A cette fin, le préfixe cyclique (ou l'intervalle de garde) d'un système OFDMA classique doit être de l'ordre du retard maximal entre les différents trajets. Toutefois, si le retard d'un trajet est supérieur au préfixe cyclique, il sera considéré comme une interférence.

Le système coopératif asynchrone de type OFDMA considéré a une topologie conforme à la figure 1. La mise en oeuvre d'un procédé selon l'invention revient à ce que chaque noeud du système coopératif asynchrone de type OFDMA émet une seule ligne de la matrice du code sur une sous porteuse :

$$C^{CP} = \begin{bmatrix} X_1 & X_2 & X_3 & X_4 & X_5 & X_6 & X_7 & X_8 \\ \varphi X'_5 & \varphi X'_6 & \varphi X'_7 & \varphi X'_8 & X'_1 & X'_2 & X'_3 & X'_4 \end{bmatrix}$$

Ainsi, le multiplexeur OFDM de chaque noeud multiplexe une des trames (une des lignes de la matrice du code) sur une des sous porteuses du multiplexeur. Les données à envoyer peuvent être formatées dans plusieurs trames successives aiguillées en parallèle par le multiplexeur OFDM sur d'autres sous porteuses.

Compte tenu de la longueur adéquate du préfixe cyclique $T_{pc}$ ou de l'intervalle de garde, la supposition qui consiste à considérer le canal comme mono trajet entre les noeuds et la destination n'est pas limitative. En fonction du délai relatif $\Delta$ de transmission entre un des noeuds et la destination, un des scénarios suivants intervient :

- Si $\Delta$ est inférieur à la durée du préfixe cyclique $T_{pc}$ (ou de l'intervalle de garde), alors le destinataire voit le code $C_0^{RC} = C^{CP}$ par sous porteuse.

- Si $\Delta$ est supérieur à la durée du préfixe cyclique(ou de l'intervalle de garde), il suffit qu'il soit compris entre $k.T_{ofdm}$ et $k.T_{ofdm} + T_{pc}$ pour que le récepteur voit le code $C_k^{CR}$ par sous porteuse, où k est un entier et où :

$$C_k^{CR} = \begin{bmatrix} X_1 & X_2 & X_3 & X_4 & X_5 & X_6 & X_7 & X_8 & 0^k \\ 0^k & \varphi X'_5 & \varphi X'_6 & \varphi X'_7 & \varphi X'_8 & X'_1 & X'_2 & X'_3 & X'_4 \end{bmatrix}.$$

La mise en oeuvre par un système coopératif asynchrone de type OFDMA du code espace temps selon l'invention a l'avantage :

- de réduire les contraintes de synchronisation entre les noeuds $T_1$ et $T_2$ puisqu'il suffit que le délai relatif $\Delta$ appartienne à un des intervalles [$k.T_{ofdm}$; $k.T_{ofdm} + T_{pc}$] pour que le destinataire puisse décoder le code reçu. Alors que, sans ce nouveau code espace temps il faut que le délai relatif $\Delta$ soit inférieur à $T_{pc}$.
- de permettre une réduction de la durée du préfixe cyclique en permettant son adaptation au seul délai relatif $\Delta$ et non pas à la valeur maximale des délais entre un noeud et le destinataire. Avec cette seule contrainte sur le préfixe cyclique, le décodage du signal à la réception est toujours possible avec une diversité de deux.

**Références :**

[1] : V. Tarokh, N. Seshadri, and A.R. Calderbank, "Space-Time Codes for High Data Rate Wireless Communication: Performance Criterion and Code Construction," IEEE Transactions on Informormation Theory, vol. 44, pp. 744-765, March 1998.

[2] : S. M. Alamouti, "A Simple Transmitter Diversity Scheme for Wireless Communications," IEEE J. Select. Areas Commun., vol. 16, pp. 1451-1458, Oct.1998.

[3] : M.O. Damen and A.R. Hammons, "Delay-Tolerant Distributed TAST Codes for Cooperative Diversity," IEEE Transactions on Information Theory, special issue on cooperative diversity, vol. 53, pp. 3755-3773, Oct. 2007.

[4] : John A.C.Bingham, "Multicarrier Modulation for Data Transmission: An Idea Whose Time Has Come", May 1990, IEEE Communications Magazine.

[5] : J-C. Belfiore, G. Rekaya and E. Viterbo, "The Golden Code : A 2 x 2 Full-Rate Space-Time Code with Non-Vanishing Determinants", IEEE International Symposium on Information Theory (ISIT), Chicago, USA, July 2004.

**Revendications**

1. Procédé (1) de transmission de trames de N>2 symboles $S_i$, destiné à un système distribué à au moins deux noeuds-émetteur, comprenant :

- une permutation circulaire (2) d'une trame de N symboles $S_i$,
- une multiplication (3) de m premiers symboles permutés par un coefficient de phase $\varphi \neq 1$, $0 < m \leq [N/2]+1$,
- une émission (4) par un des noeuds de la trame comprenant les symboles permutés multipliés et
- une émission (5) par un autre des noeuds de la trame de N symboles $S_i$.

2. Procédé (1) de transmission de trames de N>2 symboles $S_i$, destiné à un système distribué à au moins deux noeuds-émetteur, comprenant :

- une détermination (6,7) d'une première et d'une deuxième nouvelles trames comprenant des symboles construits, respectivement $X_i$ et $X'_i$, par combinaison des symboles $S_i$ d'une trame, les deux symboles construits $X_i$ et $X'_i$ à partir des mêmes symboles déterminant deux points différents d'une même constellation,
- une permutation (2) circulaire de la deuxième nouvelle trame de N symboles construits $X'_i$,
- une multiplication (3) de m premiers symboles construits permutés par un coefficient de phase $\varphi \neq 1$,

$0 < m \leq [N/2]+1$,
- une émission (4) par un des noeuds des symboles permutés et multipliés et
- une émission (5) par un autre des noeuds de la première nouvelle trame de N symboles construits $X_i$.

3. Procédé (1) selon la revendication précédente, dans lequel la première nouvelle trame comprend les symboles $X_i$ tels que $X_i = S_{2i-1} + \theta.S_{2i}$ et la deuxième nouvelle trame comprend les symboles $X'_i$ tels que $X'_i = S_{2i-1} - \theta.S_{2i}$.

4. Procédé (1) selon la revendication précédente, dans lequel $\theta = \exp(j.\dfrac{\pi}{4})$.

5. Procédé (1) selon l'une des revendications 1 à 4, dans lequel le procédé de transmission est de type OFDMA et dans lequel la trame émise par un noeud est multiplexée sur une des sous porteuses.

6. Système de transmission distribué à au moins trois noeuds dont deux noeuds-émetteur de trames de N symboles, comprenant :

   - des moyens de permutation circulaire d'une trame de N symboles,
   - des moyens de multiplication par un coefficient de phase $\varphi \neq 1$ de m premiers symboles permutés, $0 < m \leq [N/2]+1$,

   et tel que :

   - un des noeuds-émetteur comprend des moyens pour émettre la trame de symboles permutés multipliés,
   - un autre noeud-émetteur comprend des moyens pour émettre la trame de N symboles.

7. Système selon la revendication précédente de type OFDMA dans lequel chacun des deux noeuds-émetteur comprend un multiplexeur OFDM avec plusieurs sous porteuses qui multiplexe une des trames sur une des sous porteuses.

8. Programme d'ordinateur sur un support d'informations, ledit programme comportant des instructions de programme adaptées à la mise en oeuvre d'un procédé de transmission d'un signal numérique selon l'une quelconque des revendications 1 à 5, lorsque ledit programme est chargé et exécuté dans un système destiné à mettre en oeuvre le procédé de transmission.

9. Support d'informations comportant des instructions de programme adaptées à la mise en oeuvre d'un procédé de transmission d'un signal numérique selon l'une quelconque des revendications 1 à 5, lorsque ledit programme est chargé et exécuté dans un système destiné à mettre en oeuvre le procédé de transmission.

10. Relais destiné à un système de transmission distribué de type OFDMA pour la mise en oeuvre d'un procédé de transmission selon la revendication 5, comprenant :

   - des moyens de permutation circulaire pour effectuer une permutation circulaire de la trame de N symboles,
   - des moyens de multiplication pour effectuer la multiplication de m premiers symboles permutés par un coefficient de phase $\varphi \neq 1$, $0 < m \leq [N/2]+1$,
   - un multiplexeur OFDM avec plusieurs sous porteuses pour multiplexer la trame de symboles permutés comprenant les m symboles déphasés sur une des sous porteuses du multiplexeur.

11. Procédé de réception de trames de N symboles, destiné à un système distribué à au moins trois noeuds dont deux noeuds-émetteur, comprenant :

   - un décodage d'une trame reçue résultat de l'émission d'au moins une première trame émise par le premier noeud-émetteur et d'une deuxième trame émise par le deuxième noeud-émetteur en utilisant un code espace temps dont la matrice comprend autant de lignes que de noeuds-émetteur, la première ligne étant identique à la première trame émise par le premier noeud émetteur et la deuxième ligne étant construite à partir de la ligne précédente en appliquant une permutation circulaire aux symboles de la ligne précédente et une multiplication par un coefficient de phase $\varphi \neq 1$ sur m symboles permutés, $0 < m \leq [N/2]+1$.

12. Récepteur de trames de N symboles, destiné à un système distribué à au moins trois noeuds dont deux noeuds-émetteur et le récepteur, comprenant :

- un décodeur d'une trame reçue résultat de l'émission d'au moins une première trame émise par le premier noeud-émetteur et d'une deuxième trame émise par le deuxième noeud-émetteur, le décodeur ayant la fonction inverse d'un codeur utilisant un code espace temps dont la matrice comprend autant de lignes que de noeuds-émetteur, la première ligne étant identique à la première trame émise par le premier noeud émetteur et la deuxième ligne étant construite à partir de la ligne précédente en appliquant une permutation circulaire aux symboles de la ligne précédente et une multiplication par un coefficient de phase $\varphi \neq 1$ sur m symboles permutés, $0 < m \leq [N/2]+1$.

**Patentansprüche**

1. Verfahren (1) zur Übertragung von Rastern von N>2 Symbolen $S_i$, das für ein verteiltes System an mindestens zwei Sendeknoten bestimmt ist, umfassend:

   - eine kreisförmige Permutation (2) eines Rasters von N Symbolen $S_i$,
   - eine Multiplikation (3) von m ersten permutierten Symbolen mit einem Phasenkoeffizienten $\varphi \neq 1$, $0 < m \leq [N/2]+1$,
   - ein Senden (4) des Rasters, umfassend die permutierten multiplizierten Symbole, durch einen der Knoten, und
   - ein Senden (5) des Rasters von N Symbolen $S_i$ durch einen anderen der Knoten.

2. Verfahren (1) zur Übertragung von Rastern von N>2 Symbolen $S_i$, das für ein verteiltes System an mindestens zwei Sendeknoten bestimmt ist, umfassend:

   - eine Bestimmung (6, 7) eines ersten und eines zweiten neuen Rasters, umfassend Symbole $X_i$ bzw. $X'_i$, die durch Kombination der Symbole $S_i$ eines Rasters konstruiert sind, wobei die beiden aus denselben Symbolen konstruierten Symbole $X_i$ und $X'_i$ zwei unterschiedliche Punkte einer selben Konstellation bestimmen,
   - eine kreisförmige Permutation (2) des zweiten neuen Rasters von N Symbolen $X'_i$,
   - eine Multiplikation (3) von m ersten permutierten konstruierten Symbolen mit einem Phasenkoeffizienten $\varphi \neq 1$, $0 < m \leq [N/2]+1$,
   - ein Senden (4) der permutierten und multiplizierten Symbole durch einen der Knoten, und
   - ein Senden (5) des ersten neuen Rasters von N konstruierten Symbolen $X_i$ durch einen anderen der Knoten.

3. Verfahren (1) nach dem vorhergehenden Anspruch, bei dem der erste neue Raster die Symbole $X_i$ wie $X_i = S_{2i-1} + \theta.S_{2i}$ umfasst, und der zweite neue Raster die Symbole $X'_i$ wie $X'_i = S_{2i-1} - \theta.S_{2i}$ umfasst.

4. Verfahren (1) nach dem vorhergehenden Anspruch, bei dem $\theta = \exp(j.n/4)$.

5. Verfahren (1) nach einem der Ansprüche 1 bis 4, bei dem das Übertragungsverfahren vom Typ OFDMA ist, und bei dem der von einem Knoten gesandte Raster auf einer der Unter-Trägerfrequenzen gemultiplext wird.

6. System zur verteilten Übertragung an mindestens drei Knoten, darunter zwei Sendeknoten von Rastern von N Symbolen, umfassend:

   - Mittel zur kreisförmigen Permutation eines Rasters von N Symbolen,
   - Mittel zur Multiplikation von m ersten permutierten Symbolen mit einem Phasenkoeffizienten $\varphi \neq 1$, $0 < m \leq [N/2]+1$,

   und derart dass:

   - einer der Sendeknoten Mittel umfasst, um den Raster von permutierten multiplizierten Symbolen zu entsenden,
   - ein weiterer Sendeknoten Mittel umfasst, um den Raster von N Symbolen zu entsenden.

7. System nach dem vorhergehenden Anspruch vom Typ OFDMA, bei dem jeder der beiden Sendeknoten einen Multiplexer OFDM mit mehreren Unter-Trägerfrequenzen umfasst, der einen der Raster auf einer der Unter-Trägerfrequenzen multiplext.

8. Computerprogramm auf einem Informationsträger, wobei das Programm Programmbefehle umfasst, die an den Einsatz eines Verfahrens zur Übertragung eines digitalen Signals nach einem der Ansprüche 1 bis 5 angepasst sind, wenn das Programm in ein System, das dazu bestimmt ist, das Übertragungsverfahren einzusetzen, geladen ist und von diesem ausgeführt wird.

9. Informationsträger, umfassend Programmbefehle, die an den Einsatz eines Verfahrens zur Übertragung eines digitalen Signals nach einem der Ansprüche 1 bis 5 angepasst sind, wenn das Programm in ein System, das dazu bestimmt ist, das Übertragungsverfahren einzusetzen, geladen ist und von diesem ausgeführt wird.

10. Relais, das für ein verteiltes Übertragungssystem vom Typ OFDMA für den Einsatz eines Übertragungsverfahrens nach Anspruch 5 bestimmt ist, umfassend:

   - Mittel zur kreisförmigen Permutation, um eine kreisförmige Permutation des Rasters von N Symbolen durchzuführen,
   - Mittel zur Multiplikation, um die Multiplikation von m ersten permutierten Symbolen mit einem Phasenkoeffizienten $\varphi \neq 1$, $0 < m \leq [N/2]+1$, durchzuführen,
   - einen Multiplexer OFDM mit mehreren Unter-Trägerfrequenzen, um den Raster von permutierten Symbolen, umfassend die m auf einer der Unter-Trägerfrequenzen des Multiplexers phasenverschobenen Symbole, zu multiplexen.

11. Verfahren für den Empfang von Rastern von N Symbolen, das für ein verteiltes System an mindestens drei Knoten, darunter zwei Sendeknoten, bestimmt ist, umfassend:

   - eine Decodierung eines empfangenen Rasters, der das Ergebnis des Sendens mindestens eines ersten Rasters, der von dem ersten Sendeknoten gesandt wird, und eines zweiten Rasters, der von dem zweiten Sendeknoten gesandt wird, ist, unter Verwendung eines Zeit-Raum-Codes, dessen Matrix ebenso viele Zeilen wie Sendeknoten umfasst, wobei die erste Zeile identisch mit dem ersten von dem ersten Sendeknoten gesandten Raster ist, und die zweite Zeile aus der vorhergehenden Zeile konstruiert wird, wobei eine kreisförmige Permutation an den Symbolen der vorhergehenden Zeile und eine Multiplikation mit einem Phasenkoeffizienten $\varphi \neq 1$ an m permutierten Symbolen angewandt wird, $0 < m \leq [N/2]+1$.

12. Empfänger von Rastern von N Symbolen, der für ein verteiltes System an mindestens drei Knoten, darunter zwei Sendeknoten und der Empfänger, bestimmt ist, umfassend:

   - einen Decoder eines empfangenen Rasters, der das Ergebnis des Sendens mindestens eines ersten Rasters, der von dem ersten Sendeknoten gesandt wird, und eines zweiten Rasters, der von dem zweiten Sendeknoten gesandt wird, ist, wobei der Decoder die umgekehrte Funktion eines Codierers hat unter Verwendung eines Zeit-Raum-Codes, dessen Matrix ebenso viele Zeilen wie Sendeknoten umfasst, wobei die erste Zeile identisch mit dem ersten von dem ersten Sendeknoten gesandten Raster ist, und die zweite Zeile aus der vorhergehenden Zeile konstruiert wird, wobei eine kreisförmige Permutation an den Symbolen der vorhergehenden Zeile und eine Multiplikation mit einem Phasenkoeffizienten $\varphi \neq 1$ an m permutierten Symbolen angewandt wird, $0 < m \varphi [N/2]+1$.

## Claims

1. Method (1) for transmitting frames of N>2 symbols $S_i$, which is intended for a distributed system having at least two transmitter nodes, comprising:

   - a circular permutation (2) of a frame of N symbols $S_i$,
   - a multiplication (3) of m first permuted symbols by a phase coefficient $\varphi \neq 1$, $0 < m \leq [N/2]+1$,
   - a transmission (4), by one of the nodes, of the frame comprising the multiplied permuted symbols, and
   - a transmission (5), by another of the nodes, of the frame of N symbols $S_i$.

2. Method (1) for transmitting frames of N>2 symbols $S_i$, which is intended for a distributed system having at least two transmitter nodes, comprising:

   - a determination (6, 7) of a first and a second new frame comprising symbols that are constructed, $X_i$ and $X'_i$, respectively, by combination of the symbols $S_i$ of a frame, the two symbols that are constructed $X_i$ and $X'_i$ from the same symbols determining two different points of one and the same constellation,
   - a circular permutation (2) of the second new frame of N constructed symbols $X'_i$,
   - a multiplication (3) of m first permuted constructed symbols by a phase coefficient $\varphi \neq 1$, $0 < m \leq [N/2]+1$,
   - a transmission (4), by one of the nodes, of the multiplied permuted symbols, and

- a transmission (5), by another of the nodes, of the first new frame of N constructed symbols $X_i$.

3. Method (1) according to the preceding claim, in which the first new frame comprises the symbols $X_i$ such that $X_i = S_{2i-1} + \theta.S_{2i}$ and the second new frame comprises the symbols $X'_i$ such that $X'_i = S_{2i-1} + \theta.S_{2i}$.

4. Method (1) according to the preceding claim, in which $\theta = \exp(j.\frac{\pi}{4})$.

5. Method (1) according to one of Claims 1 to 4, in which the transmission method is of OFDMA type and in which the frame transmitted by a node is multiplexed on one of the subcarriers.

6. Distributed transmission system having at least three nodes including two transmitter nodes for frames of N symbols, comprising:

   - means for circular permutation of a frame of N symbols,
   - means for multiplication of m first permuted symbols by a phase coefficient $\varphi \neq 1$, $0 < m \leq [N/2]+1$,

   and such that:

   - one of the transmitter nodes comprises means for transmitting the frame of multiplied permuted symbols,
   - another transmitter node comprises means for transmitting the frame of N symbols.

7. System according to the preceding claim of OFDMA type in which each of the two transmitter nodes comprises an OFDM multiplexer having multiple subcarriers that multiplexes one of the frames onto one of the subcarriers.

8. Computer program on an information storage medium, said program having program instructions that are adapted to implement a method for transmitting a digital signal according to any one of Claims 1 to 5 when said program is loaded and executed in a system intended to implement the transmission method.

9. Information storage medium having program instructions that are adapted to implement a method for transmitting a digital signal according to any one of Claims 1 to 5 when said program is loaded and executed in a system intended to implement the transmission method.

10. Relay intended for a distributed transmission system of OFDMA type for implementing a transmission method according to Claim 5, comprising:

    - means for circular permutation for carrying out a circular permutation of the frame of N symbols,
    - multiplication means for carrying out the multiplication of m first permuted symbols by a phase coefficient $\varphi \neq 1$, $0 < m \leq [N/2]+1$,
    - an OFDM multiplexer having multiple subcarriers for multiplexing the frame of permuted symbols comprising the m phase-shifted symbols onto one of the subcarriers of the multiplexer.

11. Method for receiving frames of N symbols, which is intended for a distributed system having at least three nodes including two transmitter nodes, comprising:

    - a decoding of a received frame that is the result of the transmission of at least one first frame transmitted by the first transmitter node and of one second frame transmitted by the second transmitter node using a space-time code whose matrix comprises as many rows as transmitter nodes, the first row being identical to the first frame transmitted by the first transmitter node and the second row being constructed from the preceding row by applying a circular permutation to the symbols of the preceding row and a multiplication by a phase coefficient $\varphi \neq 1$ on m permuted symbols, $0 < m \leq [N/2]+1$.

12. Receiver for frames of N symbols, which is intended for a distributed system having at least three nodes including two transmitter nodes and the receiver, comprising:

    - a decoder for a received frame that is the result of the transmission of at least one first frame transmitted by the first transmitter node and of a second frame transmitted by the second transmitter node, the decoder having the opposite function to a coder using a space-time code whose matrix comprises as many rows as transmitter nodes, the first row being identical to the first frame transmitted by the first transmitter node and the second row being constructed from the preceding row by applying a circular permutation to the symbols of the preceding row and a multiplication by a phase coefficient $\varphi \neq 1$ on m permuted symbols, $0 < m \leq [N/2]+1$.

SYS

-T₁-

-τ₁-

-D-

-T₂-

-τ₂-

# Fig. 1

$Tr = S_1, S_2, ..., S_i, ..., S_N$

1

2

$$S_{\frac{N}{2}+1}, S_{\frac{N}{2}+2}, ..., S_N, S_1, S_2, ..., S_{\frac{N}{2}}$$

$$\varphi.S_{\frac{N}{2}+1}, \varphi.S_{\frac{N}{2}+2}, ..., \varphi.S_N, S_1, S_2, ..., S_{\frac{N}{2}}$$

3

$T_1$

5

$T_2$

4

# Fig. 2

**Fig. 3**

**Fig. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006120477 A1

**Littérature non-brevet citée dans la description**

- **V. TAROKH ; N. SESHADRI ; A.R. CALDERBANK.** Space-Time Codes for High Data Rate Wireless Communication: Performance Criterion and Code Construction. *IEEE Transactions on Informormation Theory,* Mars 1998, vol. 44, 744-765
- **S. M. ALAMOUTI.** A Simple Transmitter Diversity Scheme for Wireless Communications. *IEEE J. Select. Areas Commun.,* Octobre 1998, vol. 16, 1451-1458
- **M.O. DAMEN ; A.R. HAMMONS.** Delay-Tolerant Distributed TAST Codes for Cooperative Diversity. *IEEE Transactions on Information Theory, special issue on cooperative diversity,* Octobre 2007, vol. 53, 3755-3773
- **JOHN A.C.BINGHAM.** Multicarrier Modulation for Data Transmission: An Idea Whose Time Has Come. *IEEE Communications Magazine,* Mai 1990
- **J-C. BELFIORE ; G. REKAYA ; E. VITERBO.** The Golden Code : A 2 x 2 Full-Rate Space-Time Code with Non-Vanishing Determinants. *IEEE International Symposium on Information Theory (ISIT),* Juillet 2004